# EUROPEAN PATENT SPECIFICATION

(11) **EP 3 635 847 B1**
(45) Date of publication and mention of the grant of the patent: **24.07.2024**
(21) Application number: 18723911.6
(22) Date of filing: 30.04.2018
(51) Int. Cl.: H02K 1/26, H02K 17/16, B23Q 1/70, B23Q 5/10, H02K 7/14

(54) **MACHINING SPINDLES WITH AC INDUCTION MOTORS AND SHAFTS FOR SUCH SPINDLES**
BEARBEITUNGSSPINDELN MIT WECHSELSTROMMOTOREN UND WELLEN FÜR SOLCHE SPINDELN
BROCHES D'USINAGE ÉQUIPÉES DE MOTEURS À INDUCTION À COURANT ALTERNATIF ET ARBRES DESTINÉS À DE TELLES BROCHES

(30) Priority: 16.05.2017 GB 201707847
(43) Date of publication of application: 15.04.2020
(73) Proprietor: Novanta Technologies UK Limited, Poole, Dorset BH15 2AA (GB)
(72) Inventor: POWELL, Robin J W, Poole Dorset BH16 6LN (GB); STRATTON, John D, Poole Dorset BH16 6LN (GB)
(74) Representative: CSY London
(86) International application number: PCT/GB2018/051155
(87) International publication number: WO 2018/211239

(56) References cited:
- WO-A1-2006/030176
- GB-A- 2 461 011
- US-A1- 2005 012 428
- US-B1- 9 130 437

## Description

This invention relates to machining spindles including an AC induction motor for rotatingly driving a shaft of the spindle relative to a main body of the spindle. The invention also relates to shafts for such spindles.

It is known to provide spindles, such as air bearing spindles, for high speed machining processes where a shaft of the spindle is rotatingly driven using an AC induction motor. With suitable air bearings, for example, such spindles can allow rotational driving of a shaft and a carried tool at high rates of rotation. For example, some such spindles may be able to operate at 200,000 rpm or 300,000 rpm or even above this.

One area where such spindles are used is in the area of PCB drilling where high rotational speeds are important to allow the drilling of very small holes. Precision routing is another example area where such machining spindles may be used and operated at high speeds. Amongst other further areas, such machining spindles may be used in grinding machines, milling machines and so on.

In some such spindles an AC induction motor is formed by providing driving windings as the stator in the main body of the spindle and providing conductor portions inlayed into the material of the shaft to act as the winding of the induction rotor. Such conductor portions may be arranged as a squirrel cage rotor.

Plating techniques may be used for providing the conductor portions on the shaft to form the rotor. In particular appropriate slots may be machined or formed into the material of the shaft and conductor portions, for example of copper, deposited, for example plated, into these slots to form the conductor portions.

This can provide very good adherence of the conductor portions to the shaft to survive operation at high rotational speeds.

However, it has been determined by the applicant that at high rotational speeds even where material is plated onto the shaft there can be a breakdown of the conductor portions themselves or of the adherence between the conductor portions and the material of the shaft due to heating and/or centrifugal effects.

That said, when considering the design and operation of such induction motors for use at the high rotational speeds and high precision which are of interest in, for example, high speed PCB drilling and precision routing, there is a desire to keep the clearance between the induction rotor and stator as small as possible in order to achieve sufficient torque performance of the motor and hence machining spindle 5 as a whole.

Thus, there exists a problem as to how to improve the resilience of an induction motor rotor to the effects of high speed rotation whilst not compromising the performance of the induction motor itself.

WO 2006/030176 describes a machining spindle in which copper windings are plated onto the shaft in a plurality of multi-fluted grooves.

US 2005/012428 describes a rotor configuration for an electric machine that includes a rotor shaft with a plurality of field windings disposed over the rotor core.

According to one aspect of the present invention there is provided a machining spindle shaft according to claim 13.

According to another aspect of the present invention there is provided method of manufacturing a machining spindle as claimed in claim 11.

According to a further aspect of the present invention there is provided a method of manufacturing a machining spindle shaft according to claim 1.

Such arrangements can provide shafts with ac induction rotors which are much more resilient to high speed rotation, than in the absence of the sleeving. Furthermore it has been determined that acceptable torque performance can be obtained notwithstanding the presence of the sleeve. At the same time the increase in spacing between rotor and stator tends to allow improvement in cooling performance.

The retaining sleeve may be of carbon fibre. The retaining sleeve may be of an Inconel alloy.

The rotor may be arranged as a squirrel cage rotor. In such a case the conductor portions make up a squirrel cage winding.

The conductor portions may be plated onto the material of the shaft.

The sleeve may be provided over the whole of the winding.

In alternatives the sleeve may be provided over only part of the winding. In some cases there may be more than one sleeve, each provided for retaining a respective portion of the winding.

The sleeve may be installed by one of various different techniques.

Where of carbon fibre, the sleeve may be wound directly into position on to the shaft.

Alternatively the sleeve may be formed independently of the shaft and then fitted to the remainder shaft.

The sleeve may be one of mechanically fitted, hydraulically fitted, or fitted using heating and/or cooling.

More generally, in a fitting process, an independently formed sleeve may be expanded and/or the shaft caused to contract before location of the sleeve in position on the shaft. Then the sleeve caused or allowed to contract into position and/or the shaft caused or allowed to expand such that the sleeve can provide its containing function. This can allow pre-tensioning of the sleeve to help improve its containing function.

The conductor portions may be of copper. The conductor portions may be of other highly conductive materials such as aluminium or silver if desired.

The material of the shaft may be steel. The shaft may have a main body, which may be of steel.

The main body of the shaft may have an outer curved surface into which the conductor portions are inlayed.

The main body of the shaft may have slots into which the conductive portions are provided - by eg plating. The main body of the shaft may be machined to provide the slots. Alternatively the slots may be provided by another technique, such as casting or an additive manufacturing technique - eg making use of laser sintering. The conductive portions might also be provided by such a technique.

Embodiments of the present invention will now be described, by way of example only, with reference to the accompanying drawings in which:
Figure 1 schematically shows a machine including a machining spindle;
Figure 2 shows the machining spindle of the machine of Figure 1 in more detail;
Figure 3 shows a shaft similar to a shaft of the machining spindle shown in Figure 2 with a carbon fibre sleeve omitted;
Figure 4 shows part of the shaft shown in Figure 3 but with a carbon fibre sleeve provided over the windings provided on the shaft; and
Figures 5A and 5B respectively show longitudinal and transverse sections through the portion of the shaft shown in Figure 4.

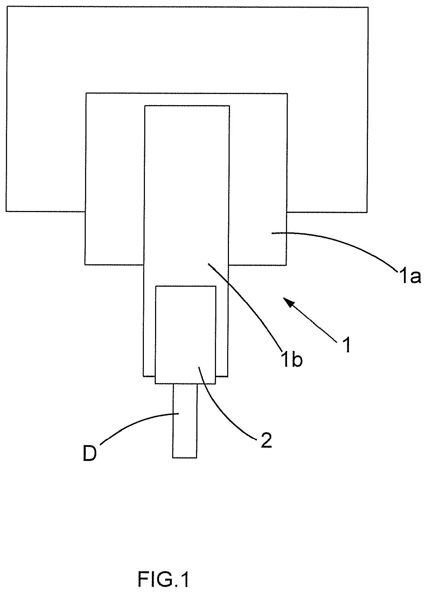

Figure 1 schematically shows a machine including a machining spindle 1 for carrying and rotatingly driving a tool D. This machining spindle may, for example, be a PCB drilling spindle or a precision routing spindle and hence the machine may be a PCB drilling machine or a precision routing machine. However, it should be noted that the present invention may be used in connection with other types of machining machines and spindles, e.g. milling spindles and machines, grinding spindles and machines and so on.

The machine and spindle may be arranged to drive the shaft at speeds up to in excess of 50,000 rpm, or at speeds up to in excess of 100,000 rpm or even 200,000 rpm or 300,000 rpm.

As shown only in schematic form in Figure 1 the machining spindle 1 comprises a main body 1a in which a shaft 1b is journaled for rotation. The shaft 1b in turn carries a tool holder 2 for holding the tool D.

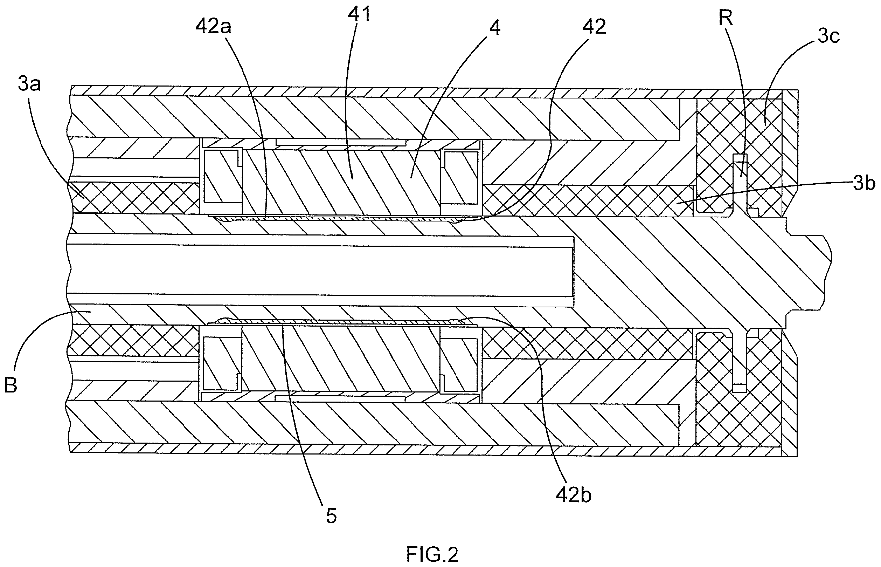

The machining spindle 1 is shown in more detail in Figure 2. As can be seen in Figure 2 the shaft 1b is journaled for rotation in a spaced pair of radial air bearings 3a, 3b. An axial air bearing 3c is also provided as a thrust bearing. An induction motor 4 for rotatingly driving the shaft 1b relative to the main body 1a of the spindle 1 is provided between the radial air bearings 3a, 3b.

The induction motor 4 is an AC induction squirrel cage motor with driving coils 41 provided as the stator in the main body 1a of the spindle and a squirrel cage winding 42 provided on the shaft 1b. The squirrel cage winding 42 is formed by conducting portions 42a, 42b inlayed into the material of the shaft 1b. The winding is made up of a plurality of longitudinal conducting portions 42a joined at respective opposite ends by two circular band portions 42b.

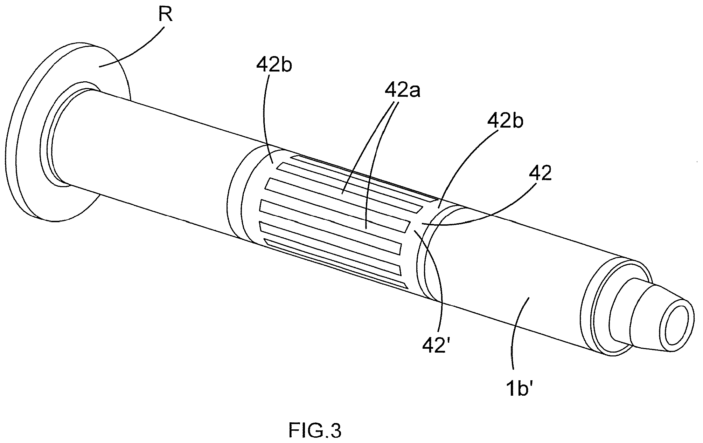

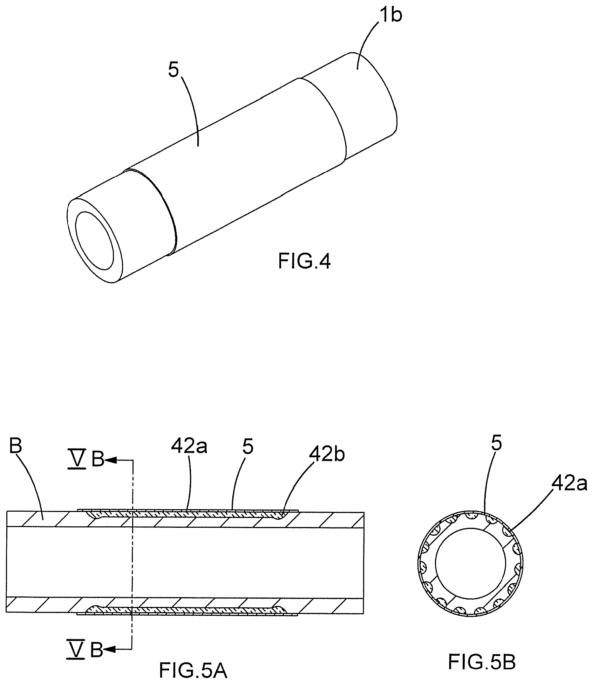

Figure 3 shows a similar shaft 1b' to that shown in Figures 1 and 2 in isolation. The difference is that the shaft 1b' shown in Figure 3 has thrust runner R for reception in a thrust bearing near the rear of a corresponding spindle whereas the shaft 1b in Figures 1 and 2 has a thrust runner R received in the thrust bearing 3c near the front of the spindle 1. Figure 4 shows a portion of the shaft 1b.

A carbon fibre sleeve 5 is provided over the main body of the shaft 1b in the region of the squirrel cage winding 42. This sleeve 5 can be seen in Figures 2 and 4 but is omitted from Figure 3 so that the squirrel cage winding itself can be seen. Note that in alternatives a different material may be used for the sleeve such as Inconel.

Figures 5A and 5B are sectional views of the portion of the shaft shown in Figure 4 where the carbon fibre sleeve 5 can be seen in position over the winding 42.

In operation of the machining spindle 1, the induction motor 4 serves to rotatingly drive the shaft 1b relative to the main body 1a of the spindle. It has been determined that the presence of the carbon fibre sleeve 5 and the additional spacing which it tends to cause between the drive coils (stator) 41 of induction motor and the squirrel cage rotor 42 still allows acceptable motor torque performance to be achieved. This is despite the additional spacing and the conductive nature of the carbon fibre material. On the other hand the carbon fibre sleeve 5 can serve to contain the conducting portions 42a, 42b in position against heating and/or centrifugal affects as the shaft is rotated at high speeds. Furthermore, improved cooling performance can be achieved due to the increase in spacing between the stator 41 and rotor 42.

In manufacture of the shaft 1b, the material of the main body B of the shaft (which typically will be of steel) is machined to form slots into which the conductor portions 42a, 42b are inlayed. Different techniques may be used for providing the conductor portions 42a, 42b in the machined slots. One technique is plating. For example, the material of the conductor portions 42a, 42b may be copper and the copper may be plated into position in the slots machined in the main body B material of the shaft.

In such a case, as a first stage of applying the conductor portions, material is plated into the slots in the shaft so as to be proud of the outer curved surface of the main body B of shaft. After this the plated material is machined down so as to be flush with the outer curved surface of the shaft. In such a machining process material of the shaft main body B itself is also removed. This then leads to a very accurately flush curved surface made up of the curved surface 42' of the conductor portions 42 and the curved surface 1b' of the main body B of the shaft 1b.

Alternatively other techniques for depositing the material of the conductor portion may be used beside plating.

Further some form of bonding or mechanical fixing may optionally be used to secure the conductor portions before providing the carbon fibre sleeve. This is true whether plating or another technique is used for providing the conductor portions.

In other alternatives slots may be provided other than by simple machining, for example casting or additive manufacturing techniques might be used. In principle additive manufacturing techniques, including say use of laser sintering, could be used to provide the whole shaft including the inlayed conductor portions.

Different techniques may be used for applying the carbon fibre sleeve 5 to the remainder of the shaft 1b.

Most simply the carbon fibre sleeve 5 may be directly wound onto the shaft at the appropriate location over the conductor portions 42a, 42b.

However, better containment may be achieved if the sleeve 5 is first independently made and then expanded before fitting over the shaft 1b and caused or allowed to contract into position onto the main body of the shaft 1b. This can better allow pre-tensioning of the carbon fibre sleeve to help in its containment function.

Hydraulic or mechanical based methods may be used for expanding the carbon fibre sleeve 5 before its positioning on the shaft 1b.

Alternatively cooling may be used to cause contraction of the shaft 1b before location of the sleeve 5, with the shaft 1b then allowed to return to its original size to tension the sleeve 5.

Where the sleeve is of a material other than carbon fibre (such as Inconel) similar techniques may be used for fitting the sleeve. In that case the sleeve may be heated before fitting to cause expansion.

## Claims

1. A method of manufacturing a machining spindle shaft (1b) for a machining spindle (1) having an ac induction motor (4) for rotatingly driving the shaft (1b) relative to a main body (1a) of the spindle, wherein the shaft comprises a tool holder (2) for holding a tool (D) and comprises the rotor for the ac induction motor and the rotor comprises a winding (42) comprising conductor portions (42a, 42b) inlayed into material of the shaft (1b), wherein the shaft further comprises a retaining sleeve (5) provided over at least a portion of the winding (42) for holding the conductor portions (42a, 42b) in place against heating and/or centrifugal effects during rotation of the shaft (1b) in use, the method comprising the steps of:
inlaying the conductor portions (42a, 42b) into the material of the shaft (1b) using a material deposition process to create the winding (42);
machining the shaft after provision of the conductor portions, to remove excess conductor portion material and provide a final outer curved surface of the conductor portions, this machining also involving removal of material from a main body of the shaft to provide the final outer curved surface of the main body of the shaft; and
providing the retaining sleeve (5) over the winding (42).

2. A method according to claim 1 comprising the step of providing the sleeve (5) over the whole of the winding (42).

3. A method according to claim 1 or claim 2 in which the retaining sleeve (5) is of carbon fibre.

4. A method according to claim 3 comprising the step of winding the carbon fibre sleeve (5) directly into position on to the shaft (1b).

5. A method according to any one of claims 1 to 3 in which the sleeve (5) is formed independently of the shaft (1b) and then fitted to the remainder shaft.

6. A method according to any preceding claim in which the shaft has a main body (B) which has slots into which the conductive portions (42a, 42b) are provided.

7. A method according to any preceding claim in which the conductor portions (42a, 42b) are plated onto the main body (B) of the shaft (1b).

8. A method according to any preceding claim in which the conductor portions (42a, 42b) are of copper.

9. A method according to any preceding claim in which the material of shaft (1b) into which the conductor portions (42a, 42b) are inlayed is of steel.

10. A method according to any preceding claim in which the shaft comprises a thrust runner (R) for reception in a thrust bearing.

11. A method of manufacturing a machining spindle comprising a shaft (1b), a main body (1a) and an ac induction motor (4) for rotatingly driving the shaft (1b) relative to the main body, the motor comprising the rotor of the shaft and a stator provided in the main body, and the method comprising making the shaft using a method according to any preceding claim and mounting the shaft in the main body.

12. A method according to claim 11 wherein the machining spindle is arranged to drive the shaft (1b) at in excess of 200,000 RPM.

13. A machining spindle shaft (1b) for a machining spindle (1) having an ac induction motor (4) for rotatingly driving the shaft (1b) relative to a main body (1a) of the spindle, wherein the shaft comprises a tool holder (2) for holding a tool (D) and comprises the rotor for the ac induction motor (4) and the rotor comprises a winding (42) comprising conductor portions (42a, 42b) inlayed into material of the shaft (1b), wherein the conductor portions (42a, 42b) have been provided onto the material of the shaft (1b) using a material deposition process,
**characterized in that** the shaft further comprises a retaining sleeve (5) provided over at least a portion of the winding (42) for holding the conductor portions (42a, 42b) in place against heating and/or centrifugal effects during rotation of the shaft (1b) in use, and the shaft (1b) has been machined after provision of the conductor portions (42a, 42b), to remove excess conductor portion material and provide a final outer curved surface of the conductor portions, this machining having also involved removal of material from a main body (1a) of the shaft (1b) to provide the final outer curved surface of the main body (1a) of the shaft (1b).

## Patentansprüche

1. Verfahren zum Fertigen einer Bearbeitungsspindelwelle (1b) für eine Bearbeitungsspindel (1) mit einem Wechselstrom-Induktionsmotor (4) als Drehantrieb für die Welle (1b) in Bezug auf einen Hauptteil (1a) der Spindel, wobei die Welle einen Werkzeughalter (2) zum Halten eines Werkzeugs (D) und den Rotor für den Wechselstrom-Induktionsmotor und der Rotor eine Wicklung (42) mit Leitungsabschnitten (42a, 42b) umfasst, die in Material der Welle (1b) eingelegt sind, wobei die Welle ferner eine Sicherungshülse (5) umfasst, die zum Festhalten der Leitungsabschnitte (42a, 42b) gegen Aufheiz- und/oder Zentrifugaleffekte beim Rotieren der Welle (1b) im Gebrauch an zumindest einem Abschnitt der Wicklung (42) vorgesehen ist, wobei das Verfahren folgende Schritte umfasst:
Einlegen der Leitungsabschnitte (42a, 42b) in das Material der Welle (1b) mithilfe eines Materialabscheideprozesses zum Erzeugen der Wicklung (42),
Bearbeiten der Welle nach dem Bereitstellen der Leitungsabschnitte zwecks Entfernens von überschüssigem Leitungsabschnittmaterial und Bereitstellens einer abschließenden gewölbten Außenfläche der Leitungsabschnitte, wobei bei diesem Bearbeiten zwecks Bereitstellens der abschließenden gewölbten Außenfläche eines Hauptteils der Welle auch Material von dem Hauptteil der Welle entfernt wird, und Bereitstellen der Sicherungshülse (5) auf der Wicklung (42).

2. Verfahren nach Anspruch 1, das den Schritt des Bereitstellens der Hülse (5) auf der gesamten Wicklung (42) umfasst.

3. Verfahren nach Anspruch 1 oder Anspruch 2, bei dem die Sicherungshülse (5) aus Kohlenstofffaser besteht.

4. Verfahren nach Anspruch 3, das den Schritt des ihrer Position entsprechenden direkten Aufwickelns der Kohlenstofffaserhülse (5) auf die Welle (1b) umfasst.

5. Verfahren nach einem der Ansprüche 1 bis 3, bei dem die Hülse (5) unabhängig von der Welle (1b) ausgebildet und dann am Rest der Welle angebracht wird.

6. Verfahren nach einem der vorhergehenden Ansprüche, bei dem die Welle einen Hauptteil (B) mit Schlitzen aufweist, in denen die leitfähigen Abschnitte (42a, 42b) bereitgestellt werden.

7. Verfahren nach einem der vorhergehenden Ansprüche, bei dem die Leitungsabschnitte (42a, 42b) auf den Hauptteil (B) der Welle (1b) plattiert werden.

8. Verfahren nach einem der vorhergehenden Ansprüche, bei dem die Leitungsabschnitte (42a, 42b) aus Kupfer bestehen.

9. Verfahren nach einem der vorhergehenden Ansprüche, bei dem das Material der Welle (1b), in das die Leitungsabschnitte (42a, 42b) eingelegt werden, aus Stahl besteht.

10. Verfahren nach einem der vorhergehenden Ansprüche, bei dem die Welle ein Druckrad (R) zum Unterbringen in einem Drucklager umfasst.

11. Verfahren zum Fertigen einer Bearbeitungsspindel mit einer Welle (1b), einem Hauptteil (1a) und einem Wechselstrom-Induktionsmotor (4) als Drehantrieb für die Welle (1b) in Bezug auf den Hauptteil, wobei der Motor den Rotor der Welle und einen Stator umfasst, der in dem Hauptteil vorgesehen ist, und das Verfahren das Herstellen der Welle mithilfe eines Verfahrens nach einem der vorhergehenden Ansprüche und das Einbauen der Welle im Hauptteil umfasst.

12. Verfahren nach Anspruch 11, wobei die Bearbeitungsspindel so angeordnet ist, dass sie die Welle (1b) mit mehr als 200.000 U/min antreibt.

13. Bearbeitungsspindelwelle (1b) für eine Bearbeitungsspindel (1) mit einem Wechselstrom-Induktionsmotor (4) als Drehantrieb für die Welle (1b) in Bezug auf einen Hauptteil (1a) der Spindel, wobei die Welle einen Werkzeughalter (2) zum Halten eines Werkzeugs (D) und den Rotor für den Wechselstrom-Induktionsmotor (4) und der Rotor eine Wicklung (42) mit Leitungsabschnitten (42a, 42b) umfasst, die in Material der Welle (1b) eingelegt sind, wobei die Leitungsabschnitte (42a, 42b) mithilfe eines Materialabscheideprozesses auf dem Material der Welle (1b) bereitgestellt wurden, **dadurch gekennzeichnet, dass** die Welle ferner eine Sicherungshülse (5) umfasst, die zum Festhalten der Leitungsabschnitte (42a, 42b) gegen Aufheiz- und/oder Zentrifugaleffekte beim Rotieren der Welle (1b) im Gebrauch an zumindest einem Abschnitt der Wicklung (42) vorgesehen ist, und die Welle (1b) nach dem Bereitstellen der Leitungsabschnitte (42a, 42b) zwecks Entfernens von überschüssigem Leitungsabschnittmaterial und Bereitstellens einer abschließenden gewölbten Außenfläche der Leitungsabschnitte bearbeitet wurde, wobei bei diesem Bearbeiten zwecks Bereitstellens der abschließenden gewölbten Außenfläche eines Hauptteils (1a) der Welle (1b) auch Material von dem Hauptteil (1a) der Welle (1b) entfernt wurde.

## Revendications

1. Procédé de fabrication d'un arbre de broche d'usinage (1b) pour une broche d'usinage (1) ayant un moteur à induction à courant alternatif (4) servant à des fins d'entraînement rotatif de l'arbre (1b) par rapport à un corps principal (1a) de la broche, dans lequel l'arbre comporte un porte-outil (2) servant à tenir un outil (D) et comporte le rotor pour le moteur à induction à courant alternatif et le rotor comporte un enroulement (42) comportant des parties conductrices (42a, 42b) noyées dans le matériau de l'arbre (1b), dans lequel l'arbre comporte par ailleurs un manchon de retenue (5) mis en oeuvre sur au moins une partie de l'enroulement (42) pour maintenir les parties conductrices (42a, 42b) en place contre les effets de chauffage et/ou de centrifugation au cours de la rotation de l'arbre (1b) lors de l'utilisation, le procédé comportant les étapes consistant à :
noyer les parties conductrices (42a, 42b) dans le matériau de l'arbre (1b) au moyen d'un procédé de dépôt de matériau pour créer l'enroulement (42) ;
usiner l'arbre après avoir fourni les parties conductrices, pour éliminer tout excès de matériau de partie conductrice et pour fournir une surface courbe extérieure finale des parties conductrices, cet usinage impliquant également le retrait de matériau d'un corps principal de l'arbre pour fournir la surface courbe extérieure finale du corps principal de l'arbre ; et
mettre en oeuvre le manchon de retenue (5) sur l'enroulement (42).

2. Procédé selon la revendication 1, comportant l'étape consistant à mettre en oeuvre le manchon (5) sur la totalité de l'enroulement (42).

3. Procédé selon la revendication 1 ou la revendication 2, dans lequel le manchon de retenue (5) est en fibre de carbone.

4. Procédé selon la revendication 3, comportant l'étape consistant à enrouler le manchon en fibre de carbone (5) directement en position sur l'arbre (1b).

5. Procédé selon l'une quelconque des revendications 1 à 3, dans lequel le manchon (5) est formé indépendamment de l'arbre (1b) et est ensuite ajusté sur l'arbre restant.

6. Procédé selon l'une quelconque des revendications précédentes, dans lequel l'arbre a un corps principal (B) qui a des fentes dans lesquelles les parties conductrices (42a, 42b) sont mises en oeuvre.

7. Procédé selon l'une quelconque des revendications précédentes, dans lequel les parties conductrices (42a, 42b) sont plaquées sur le corps principal (B) de l'arbre (1b).

8. Procédé selon l'une quelconque des revendications précédentes, dans lequel les parties conductrices (42a, 42b) sont en cuivre.

9. Procédé selon l'une quelconque des revendications précédentes, dans lequel le matériau de l'arbre (1b) dans lequel les parties conductrices (42a, 42b) sont noyées est en acier.

10. Procédé selon l'une quelconque des revendications précédentes, dans lequel l'arbre comporte une glissière de butée (R) destinée à être reçue dans un palier de butée.

11. Procédé de fabrication d'une broche d'usinage comportant un arbre (1b), un corps principal (1a) et un moteur à induction à courant alternatif (4) servant à des fins d'entraînement rotatif de l'arbre (1b) par rapport au corps principal, le moteur comportant le rotor de l'arbre et un stator mis en oeuvre dans le corps principal, et le procédé comportant la fabrication de l'arbre en utilisant un procédé selon l'une quelconque des revendications précédentes et le montage de l'arbre dans le corps principal.

12. Procédé selon la revendication 11, dans lequel la broche d'usinage est agencée pour entraîner l'arbre (1b) à une vitesse supérieure à 200 000 tr/min.

13. Arbre de broche d'usinage (1b) pour une broche d'usinage (1) ayant un moteur à induction à courant alternatif (4) servant à des fins d'entraînement rotatif de l'arbre (1b) par rapport à un corps principal (1a) de la broche, dans lequel l'arbre comporte un porte-outil (2) servant à tenir un outil (D) et comporte le rotor pour le moteur à induction à courant alternatif (4) et le rotor comporte un enroulement (42) comportant des parties conductrices (42a, 42b) noyées dans le matériau de l'arbre (1b), dans lequel les parties conductrices (42a, 42b) ont été mises en oeuvre sur le matériau de l'arbre (1b) au moyen d'un procédé de dépôt de matériau,
**caractérisé en ce que** l'arbre comporte par ailleurs un manchon de retenue (5) mis en oeuvre sur au moins une partie de l'enroulement (42) pour maintenir les parties conductrices (42a, 42b) en place contre les effets de chauffage et/ou de centrifugation au cours de la rotation de l'arbre (1b) lors de l'utilisation, et
l'arbre (1b) a été usiné après la fourniture des parties conductrices (42a, 42b), pour enlever tout excès de matériau de partie conductrice et fournir une surface courbe extérieure finale des parties conductrices, cet usinage ayant également impliqué le retrait de matériau d'un corps principal (1a) de l'arbre (1b) pour obtenir la surface courbe extérieure finale du corps principal (1a) de l'arbre (1b).
